(19) **Europäisches Patentamt / European Patent Office / Office européen des brevets**

(11) **EP 4 195 458 B1**

(12) # EUROPEAN PATENT SPECIFICATION

(45) Date of publication and mention
of the grant of the patent:
**03.09.2025 Bulletin 2025/36**

(21) Application number: **21946505.1**

(22) Date of filing: **25.06.2021**

(51) International Patent Classification (IPC):
$H02K\ 1/24^{(2006.01)}$   $H02K\ 3/52^{(2006.01)}$
$H02K\ 3/487^{(2006.01)}$   $H02K\ 1/26^{(2006.01)}$

(52) Cooperative Patent Classification (CPC):
**H02K 1/24; H02K 1/265; H02K 3/487; H02K 3/527;**
H02K 2201/03; H02K 2213/03

(86) International application number:
**PCT/CN2021/102392**

(87) International publication number:
**WO 2022/267011 (29.12.2022 Gazette 2022/52)**

(54) **ROTOR, ELECTRIC MOTOR, POWERTRAIN AND VEHICLE**

ROTOR, ELEKTROMOTOR, ANTRIEBSSTRANG UND FAHRZEUG

ROTOR, MOTEUR ÉLECTRIQUE, GROUPE MOTOPROPULSEUR ET VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.06.2023 Bulletin 2023/24**

(73) Proprietor: **Huawei Digital Power Technologies
Co., Ltd.
Shenzhen, Guangdong 518043 (CN)**

(72) Inventors:
• **LAN, Hua
Shenzhen, Guangdong 518129 (CN)**
• **ZHOU, Zhao
Shenzhen, Guangdong 518129 (CN)**

• **CHEN, Jinhua
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(56) References cited:
CN-A- 104 160 595    CN-A- 107 465 321
CN-U- 207 603 313    DE-A1- 102019 133 580
KR-B1- 101 378 885    KR-B1- 101 378 885
US-A1- 2011 095 643    US-A1- 2015 076 935
US-A1- 2019 356 182    US-A1- 2021 006 105
US-B2- 9 876 400

## Description

## TECHNICAL FIELD

Embodiments of this application relate to the field of motor technologies, and in particular, to a rotor, a motor, a powertrain, and a vehicle.

## BACKGROUND

A motor is an electromagnetic apparatus that implements electric energy conversion or transfer according to the law of electromagnetic induction, and a main function of the motor is to generate drive torque as a power source of power-consuming devices or various machines. With development of miniaturization of a motor in a powertrain, power density of the motor increases gradually. An excitation motor mainly includes a housing and a front cover plate and a rear cover plate that are located at two ends of the housing. The front cover plate, the rear cover plate, and an inner wall of the housing jointly form a sealed cavity. A stator, a rotor, a rotating shaft, and windings (also referred to as coils) are disposed in the cavity. One end of the rotating shaft extends out of the housing from the front cover plate, the other end of the rotating shaft rotates relative to the rear cover plate, the rotor is sleeved on the rotating shaft, the stator is sleeved on an outer circumference of the rotor, the rotor includes a rotor core and windings disposed around the rotor core, and the stator includes a stator core and coils disposed around the stator core.

A salient-pole motor is used as an example. More windings can be disposed on a rotor of the salient-pole motor, and torque density and power density of the motor can be increased. A pole shoe of a salient-pole rotor fits a wedge accommodated in a slot, to protect the windings and prevent the windings from flying and being damaged under action of centrifugal force when the rotor rotates at a high speed.

As requirements for power density of the motor become higher, requirements for the wedge and the pole shoe become higher. To increase power density of the motor, more windings need to be accommodated. Therefore, effective winding space of the slot needs to be as large as possible, and the wedge and the pole shoe need to be as small as possible. The wedge and the pole shoe need to ensure sufficient strength in a case of a smaller size. Therefore, how to design the rotor becomes an urgent technical problem to be resolved.

U S2015/076935 A1 discloses a rotor for a rotating electrical machine that may include a number of pole teeth which carry a field winding, slots formed between the pole teeth, slot wedges provided in the slots, and separators arranged in the slots, the separators extending, starting from the slot wedges, between the windings in a direction toward a slot base.

DE 10 2019 133 580 A1 discloses a salient pole rotor for a synchronous machine, comprising: - a rotor core with a yoke ring and a plurality of salient poles, each of which has a pole shaft projecting radially from the yoke ring and a pole shoe arranged on the pole shaft, wherein a groove-like pole gap is formed between two adjacent salient poles, - rotor coils for generating an electrically excited magnetic flux, which are wound around the pole shafts and arranged in the pole gaps, and - slot closure elements which are fastened to two adjacent pole shoes in order to close the pole gaps and which are at least partially designed as permanent magnets, wherein the permanent magnets are designed to provide a hybrid excited magnetic flux by superimposing the electrically excited flux by generating a permanently excited magnetic flux and to generate magnetic To reduce stray fluxes during operation of the synchronous machine.

## SUMMARY

Embodiments of this application provide a rotor, a motor, a powertrain, and a vehicle. The rotor includes wedges and pole shoes. The wedges fit the pole shoes through curved portions. The curved portions can effectively relieve stress concentration of joint portions, increase strength of the wedges and the pole shoes, and effectively increase effective winding space of slots in the rotor. In this way, power density of a motor in which the rotor is used is increased.

According to a first aspect, the invention as defined in claim 1 provides a rotor, including: a rotor core, a plurality of slots, and a rotating shaft. Each slot includes one wedge, and rotor windings are wound in each slot. The rotor core is sleeved on the rotating shaft, and the plurality of slots are disposed at intervals along a circumferential direction of the rotor core. The rotor core includes a rotor core body and a plurality of pole shoes, and the plurality of pole shoes are disposed at intervals along a circumferential direction of the rotor core body. The pole shoe includes a pole shoe body and two symmetrical hook-shaped pole shoe end portions. The hook-shaped pole shoe end portion becomes thinner along a circumferential direction relative to the pole shoe body and includes at least one first curved portion. The wedge includes a wedge body and two symmetrical first wedge portions, each first wedge portion includes at least one second curved portion, and each first wedge portion fits one hook-shaped pole shoe end portion of one of the pole shoes.

To implement fitting between the first wedge portion and the first curved portion, the at least one second curved portion included in the first wedge portion needs to be in pairs with the at least one first curved portion of the hook-shaped pole shoe end portion.

It should be noted that a "curved portion" in this embodiment of this application may be alternatively replaced with a circular arc, a curve, a curved surface, a circular arc surface, an arc surface, or an arc. For example, a convex curved portion may also be referred to as a convex circular arc, a convex curved surface, a convex arc surface, or a convex arc; and a concave curved portion may also be referred to as a concave circular arc, a concave curved surface, a concave arc surface, or a concave arc. This is not limited herein.

In the invention, the wedges fit the pole shoes through curved portions. The curved portions can effectively relieve stress concentration of joint portions, increase strength of the wedges and the pole shoes, and effectively increase effective winding space of the slots in the rotor. In this way, strength of the wedges and the pole shoes is increased, a maximum speed of the motor can also be increased, and power density of the motor is increased.

With reference to the first aspect, in some implementations, the first curved portion includes a first concave curved portion and/or a first convex curved portion; and the first wedge portion includes a second convex curved portion and/or a second concave curved portion. The first concave curved portion of the first curved portion fits the second convex curved portion of the first wedge portion, and/or the first convex curved portion of the first curved portion fits the second concave curved portion of the first wedge portion.

Optionally, the first curved portion may include one or more first concave curved portions, one or more first convex curved portions, and/or one or more line segments. The first wedge portion may include one or more second concave curved portions, one or more second convex curved portions, and/or one or more line segments. The first wedge portion separately fits first curved portions in hook-shaped pole shoe end portions of two adjacent pole shoes.

The first wedge portion fits the first curved portions through a plurality of curved portions, to further relieve stress concentration of the joint portions, increase strength of the wedges and the pole shoes, and effectively increase the effective winding space of the slots wound in the rotor. In this way, strength of the wedges and the pole shoes is increased, a maximum speed of the motor can also be increased, and power density of the motor is increased.

According to the invention, the pole shoe further includes a second pole shoe portion, and the second pole shoe portion is connected to the first curved portion. The second pole shoe portion is in an eccentric circular arc shape, and a center position of the eccentric circular arc shape does not coincide with an axis center of the rotating shaft; or the second pole shoe portion is in an arc shape of an air gap secant function.

Optionally, one or more concave curved portions, one or more convex curved portions, and/or one or more line segments may be further included between the second pole shoe portion and the first curved portion. The second pole shoe portion is connected to the first curved portion through the foregoing structure.

The foregoing pole shoe structure is used, so that torque fluctuation of the motor in which the pole shoe is used can be effectively reduced, and performance of noise, vibration, and harshness (NVH) of the motor can be improved.

With reference to the first aspect, in some implementations, an air gap length of the second pole shoe portion satisfies $\delta(\theta) = \delta_0 \cdot \sec\theta$, where $\delta(\theta)$ represents the air gap length of the second pole shoe portion, $\delta_0$ represents an air gap length at a position of a symmetry line of a pole arc curve in the pole shoe, and $\theta$ represents a circumferential angle between a radial line on which the second pole shoe portion is located and the symmetry line of the pole shoe. There is an air gap between an outer circumferential surface of the rotor core and an inner cavity wall of a stator. The pole arc curve encloses a main area in which the pole shoe faces an air gap.

According to the invention, the pole shoe further includes a third pole shoe portion, and the third pole shoe portion includes one or more third concave curved portions. The third pole shoe portion is tangent to the first curved portion, the third pole shoe portion is tangent to the second pole shoe portion, and the third pole shoe portion is used to extend a circumferential length of the pole shoe. In this way, the pole shoe can accommodate more rotor windings, and torque density and power density of the motor in which the rotor is used are increased.

Optionally, the third pole shoe portion may further include one or more line segments and one or more third concave curved portions.

With reference to the first aspect, in some implementations, the wedge body is used to isolate rotor windings on two sides, so that the wedge performs an insulation function. The wedge may be made of an insulation material.

With reference to the first aspect, in some implementations, the wedge further includes a second wedge portion, the second wedge portion is formed between the two first wedge portions, and the second wedge portion includes at least one concave curved portion. Two sides of the second wedge portion each are connected to one pair of first wedge portions. The second wedge portion is in an arc surface shape, so that stress concentration in an area of an arc surface can be relieved, and strength of the wedge can be increased.

With reference to the first aspect, in some implementations, the wedge further includes one or more pairs of third wedge portions; each pair of third wedge portions are symmetrically located on two sides of the wedge body; each pair of third wedge portions are symmetrical along a symmetry axis of the wedge; and the third wedge portion includes one or more circular arc curved portions and/or one or more line segments. The circular arc curved portion may be a convex curved portion, or may be a concave curved portion, or may be a combination of a convex curved portion and a concave curved portion. This is not limited herein. Bonding strength between the wedge and potting compound is increased through the third wedge portion, and stability of the rotor is improved.

With reference to the first aspect, in some implementations, when the wedge includes the plurality of pairs of third wedge portions, the plurality of pairs of third wedge portions are different in size and/or shape. In this way, strength of the wedge is increased, and stability of the rotor is further improved.

With reference to the first aspect, in some implementations, the wedge further includes a fourth wedge portion, and a radial bottom of the wedge body includes the fourth wedge portion. The rotor core further includes a first rotor core portion. The first rotor core portion radially faces toward the slot. A plurality of first rotor core portions are disposed at intervals along a circumferential direction of the rotor core body. The fourth wedge portion fits the first rotor core portion, to implement connection between the wedge and the rotor core. In this way, strength of a joint portion between the wedge and the rotor core is increased, and stability of the rotor is further improved.

With reference to the first aspect, in some implementations, the slot is filled with the potting compound. The potting compound is bonded to the wedge, the potting compound is bonded to the pole shoe, and the potting compound is bonded to the rotor windings. The wedges, the pole shoes, the rotor windings, and the rotor core inside the rotor are solidified as a whole by using the potting compound. In this way, strength of the rotor is increased, and stability of the rotor is improved.

According to a second aspect, an embodiment of this application provides a motor, including a stator and the rotor according to any one of the implementations of the first aspect. The stator is sleeved on an outer circumference of a rotor core of the rotor, and stator windings are disposed on the stator. Wedges fit pole shoes through curved portions. The curved portions can effectively relieve stress concentration of joint portions, increase strength of the wedges and the pole shoes, and effectively increase effective winding space of slots in the rotor. In this way, strength of the wedges and the pole shoes is increased, a maximum speed of the motor can also be increased, and power density of the motor is increased. The motor is an excitation motor.

According to a third aspect, an embodiment of this application provides a powertrain, including the motor according to any one of the foregoing implementations of the first aspect. The motor ensures that the powertrain keeps high efficiency in various running statuses.

With reference to the third aspect, in some implementations, the powertrain further includes a controller and a reducer. The controller is connected to the motor, the reducer is connected to the motor, the controller is configured to control working of the motor, and the reducer is configured to control a rotation speed of the motor.

According to a fourth aspect, an embodiment of this application provides a vehicle. The vehicle includes a vehicle frame and the motor according to any one of the foregoing implementations of the first aspect, and the motor is mounted on the vehicle frame. The motor enables that the vehicle keeps high efficiency in various running statuses, so that an endurance mileage of the vehicle can be effectively increased, and comprehensive running efficiency of the vehicle can be increased.

## BRIEF DESCRIPTION OF DRAWINGS

FIG. 1 is a schematic diagram of a structure of an electric vehicle;
FIG. 2 is a schematic diagram of a structure of a motor according to an embodiment of this application;
FIG. 3 is a schematic diagram of a structure of a rotor according to an embodiment of this application;
FIG. 4 is a schematic diagram of a structure of a pole shoe according to an embodiment of this application;
FIG. 5 is a schematic diagram of a structure of a wedge according to an embodiment of this application;
FIG. 6 is a schematic diagram of a partial structure of a rotor according to an embodiment of this application;
FIG. 7 is a schematic diagram of a structure of a pole shoe according to an embodiment of this application;
FIG. 8 is a schematic diagram of a structure of a hook-shaped pole shoe end portion according to an embodiment of this application;
FIG. 9 is a schematic diagram of another structure of a hook-shaped pole shoe end portion according to an embodiment of this application;
FIG. 10 is a schematic diagram of still another structure of a pole shoe according to an embodiment of this application;
FIG. 11 is a schematic diagram of yet another structure of a pole shoe according to an embodiment of this application;
FIG. 12 is a schematic diagram of another structure of a wedge according to an embodiment of this application;
FIG. 13 is a schematic diagram of a structure of a first wedge portion according to an embodiment of this application;
FIG. 14 is a schematic diagram of another partial structure of a rotor according to an embodiment of this application; and
FIG. 15 is a schematic diagram of a structure of a third wedge portion according to an embodiment of this application.

## DESCRIPTION OF EMBODIMENTS

Embodiments of this application provide a rotor, a motor, a powertrain, and a vehicle. The rotor includes wedges and pole shoes. The wedges fit the pole shoes through curved portions. The curved portions can effectively relieve stress concentration of joint portions, increase strength of the wedges and the pole shoes, and effectively increase effective winding space of slots in the rotor. In this way, power density of a motor in which the rotor is used is increased.

The following describes embodiments of this application with reference to accompanying drawings. A person of ordinary skill in the art may learn that, with technology development and emergence of a new scenario, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances. This is merely a discrimination manner that is used when objects having a same attribute are described in embodiments of this application. In addition, the terms "include", "having" and any other variants mean to cover the non-exclusive inclusion, so that a process, method, system, product, or device that includes a series of units is not necessarily limited to those units, but may include other units not expressly listed or inherent to such a process, method, product, or device.

In embodiments of this application, "connection" is a physical connection, or a connection that can be made, or fitting, or contacting, or embedding, or clamping, or inosculating, or the like. The "connection" may alternatively be a location relationship between parts in a physical whole. This is not limited herein.

Electric excitation synchronous motors can be classified into a salient-pole motor and a hidden-pole motor, and an electric excitation synchronous motor used in a new energy vehicle usually uses a salient-pole rotor structure. A salient-pole rotor can accommodate more rotor windings, to increase torque density and power density of the motor. A pole shoe of the salient-pole rotor fits a wedge accommodated in a slot, to protect the windings and prevent the windings from flying and being damaged under action of centrifugal force when the rotor rotates at a high speed.

As requirements for power density of the motor become higher, requirements for the wedge and the pole shoe become higher. To increase power density of the motor, more windings need to be accommodated. Therefore, effective winding space of the slot needs to be as large as possible, and the wedge and the pole shoe need to be as small as possible. The wedge and the pole shoe need to ensure sufficient strength in a case of a smaller size. Therefore, how to design the rotor becomes an urgent technical problem to be resolved.

To resolve the foregoing technical problem, an embodiment of this application provides a rotor. A motor in which the rotor is used may be used in an electric vehicle ( EV), a pure electric vehicle (PEV), a hybrid electric vehicle (HEV), a range extended electric vehicle (REEV), a plug-in hybrid electric vehicle (PHEV), a new energy vehicle, battery management, a motor driver, a power converter, or the like.

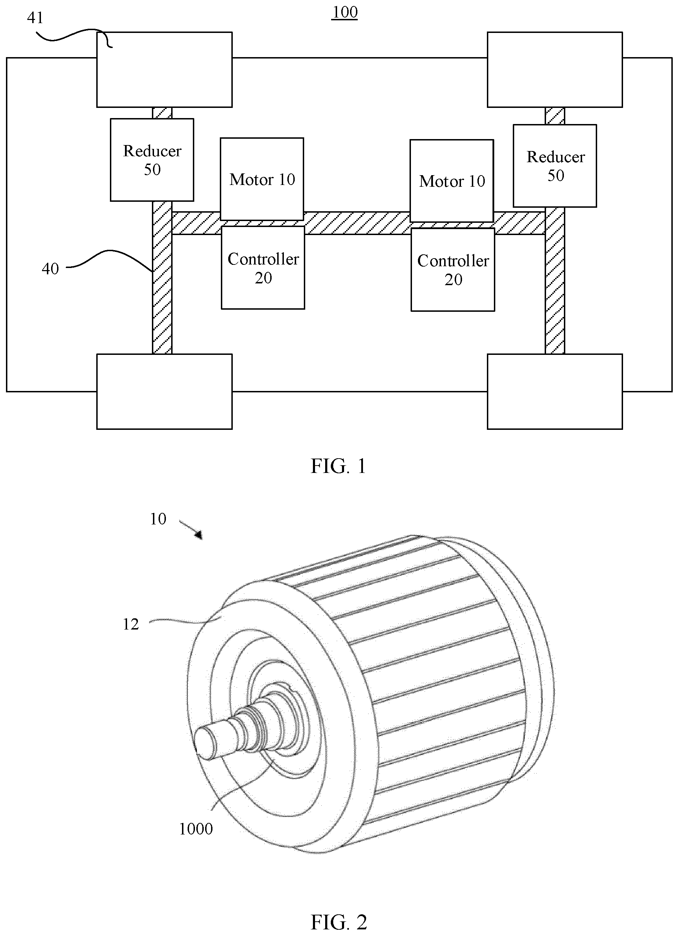

In this embodiment of this application, an example in which a motor is used in an electric vehicle is used for description. FIG. 1 is a schematic diagram of a structure of the electric vehicle. The electric vehicle 100 may include a vehicle frame 40 and a powertrain. The powertrain is mounted on the vehicle frame 40. The vehicle frame 40 is used as a structural framework of the electric vehicle, and is configured to support, fasten, and connect various systems, and bear a load inside a vehicle system and a load from an external environment.

The powertrain is a system that includes a series of components and is configured to produce power and transmit the power to a road surface. Refer to FIG. 1. The powertrain may include controllers 20 and motors 10. The controller 20 is electrically connected to the motor 10 and is configured to control working of the motor 10. The powertrain may further include reducers 50. The reducer 50 is configured to be mechanically connected to the motor 10, and is configured to reduce a rotation speed of the motor 10 and increase output torque of the motor 10, to adjust a speed of the vehicle.

The electric vehicle 100 further includes wheels 41 disposed on the vehicle frame 40. A rotating shaft of the powertrain is connected to the wheels 41 through transmission components. In this way, the rotating shaft of the powertrain outputs power, and the transmission components transmit the power to the wheels 41, so that the wheels 41 rotate. In this embodiment of this application, the powertrain may include one, two, or more motors 10. When there is one motor, the motor is connected to two front wheels or two rear wheels through transmission components. When there are two motors, one of the motors is connected to the two front wheels through transmission components, and the other motor is connected to the two rear wheels through other transmission components.

It should be noted that the electric vehicle 100 is merely used as an example for description, and the electric vehicle 100 may further include another component. This is not limited herein.

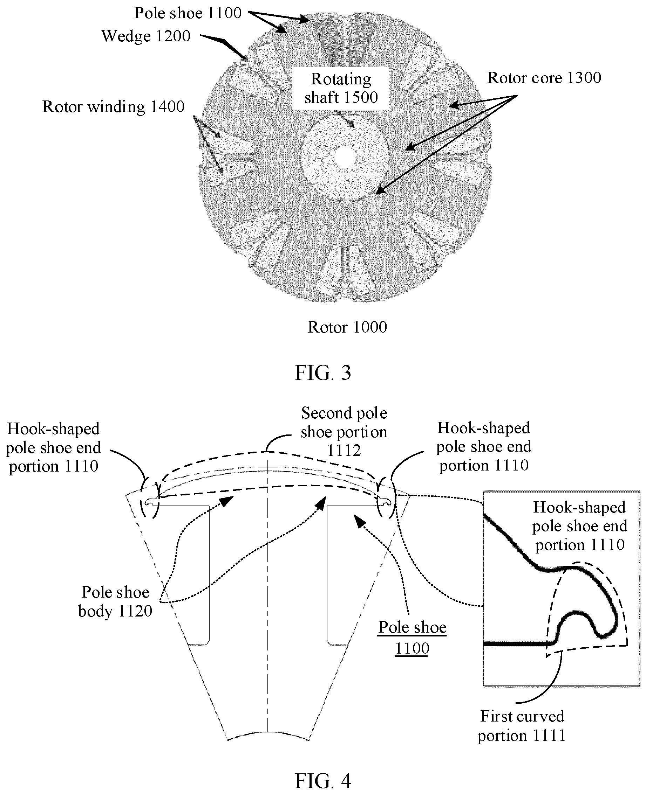

Further, FIG. 2 is a schematic diagram of a structure of a motor according to an embodiment of this application. A motor 10 includes a stator 12 and a rotor 1000. FIG. 3 is a schematic diagram of a structure of a rotor according to an embodiment of this application. The rotor 1000 includes pole shoes 1100, wedges 1200, a rotor core 1300, rotor windings 1400, and a rotating shaft 1500. As shown in FIG. 3, the rotor core 1300 and the rotating shaft 1500 each may be cylindrical, and have an axial direction and a circumferential surface. The rotor core 1300 has an axial hole extending along the axial direction, and the rotor core 1300 is sleeved on the rotating shaft 1500 through the axial hole and is fastened to the rotating shaft 1500, so that the rotating shaft 1500 rotates with the rotor core 1300.

The stator 12 may have a cylindrical inner cavity. The stator 12 is sleeved on an outer circumference of the rotor core 1300, and the rotor core 1300 is located in the inner cavity of the stator 12. The stator 12 includes a stator core and stator windings disposed around the stator core. An air gap is between an outer circumferential surface of the rotor core 1300 and an inner cavity wall of the stator 12. The rotating shaft 1500 penetrates out of the inner cavity of the stator 12, so that the rotating shaft 1500 is connected to the reducer 50 to output torque.

The following describes in detail the rotor 1000 provided in this embodiment of this application. Refer to FIG. 3. The rotor 1000 includes the rotor core 1300, a plurality of wedges 1200, a plurality of pole shoes 1100, a plurality of rotor windings 1400, and the rotating shaft 1500. The rotor core 1300 is sleeved on the rotating shaft 1500. The rotor windings 1400 are wound in each slot, and a plurality of slots are disposed at intervals along a circumferential direction of the rotor core 1300. The rotor windings 1400 are wound in the slots of the rotor core 1300, and the plurality of rotor windings 1400 are disposed at intervals along the circumferential direction of the rotor core 1300. The rotor core 1300 includes a rotor core body and the plurality of pole shoes 1100, and the plurality of pole shoes 1100 are disposed at intervals along a circumferential direction of the rotor core body. The wedge 1200 is disposed in a slot opening that is in the slot and that is away from the rotating shaft 1500. The plurality of wedges 1200 are disposed at intervals along the circumferential direction of the rotor core body.

Further, the wedge 1200 is of a closed solid structure. The wedge 1200 may be made of an insulation material, for example, a polymer.

Further, the pole shoe 1100 may be made of a magnetic conductive material such as a silicon steel sheet.

FIG. 4 is a schematic diagram of a structure of a pole shoe according to an embodiment of this application. A pole shoe 1100 includes two symmetrical hook-shaped pole shoe end portions 1110 and a pole shoe body 1120. The two hook-shaped pole shoe end portions 1110 are axisymmetrically disposed along the pole shoe body. The hook-shaped pole shoe end portion 1110 becomes thinner along a circumferential direction relative to the pole shoe body and includes at least one first curved portion 1111. An area, facing an air gap, between the two hook-shaped pole shoe end portions 1110 is referred to as a second pole shoe portion 1112.

Optionally, one or more concave curved portions, and/or one or more convex curved portions, and/or one or more line segments may be further included between the second pole shoe portion 1112 and the first curved portion 1111. The second pole shoe portion 1112 is connected to the first curved portion 1111 through the foregoing structure.

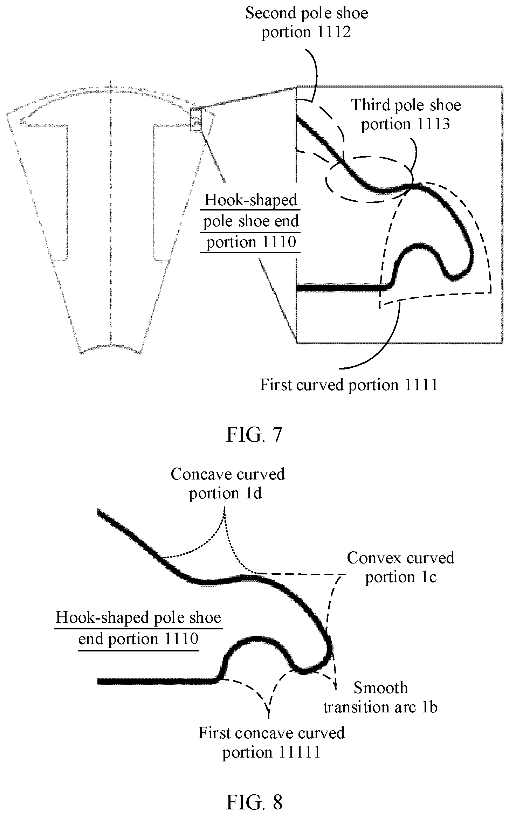

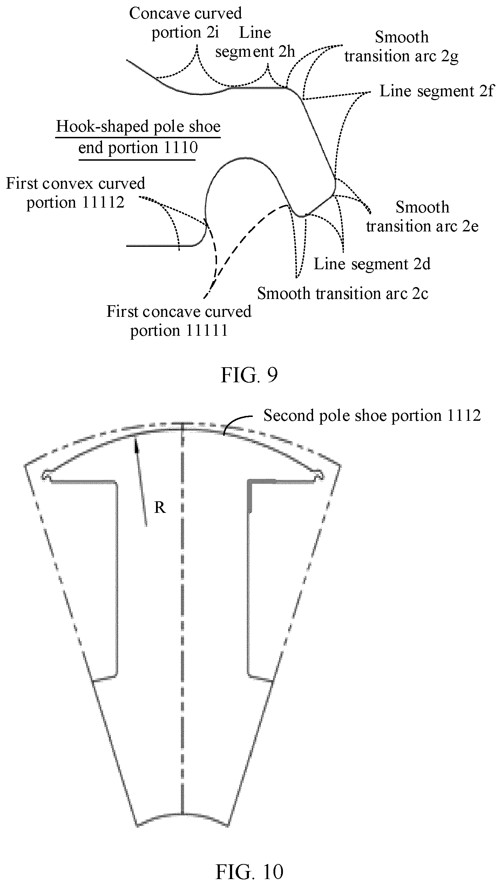

As shown in FIG. 8 and FIG. 9, the hook-shaped pole shoe end portion 1110 includes the first curved portion 1111. The first curved portion 1111 includes one or more first concave curved portions 11111, and/or one or more first convex curved portions 11112, and/or one or more line segments.

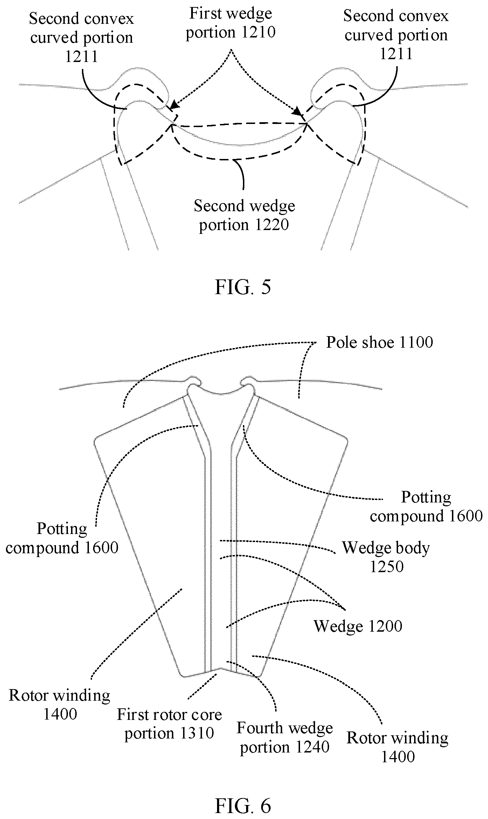

FIG. 5 is a schematic diagram of a structure of a wedge according to an embodiment of this application. A first wedge portion 1210 fits first curved portions 1111 in hook-shaped pole shoe end portions 1110 of two adjacent pole shoes 1100.

To implement fitting between the first wedge portion 1210 and the first curved portion 1111, at least one second convex curved portion 1211 and/or at least one second concave curved portion 1212 that are/is included in the first wedge portion 1210 needs to be in pairs with at least one first convex curved portion 11112 and/or at least one first concave curved portion 11111 that are/is included in the first curved portion 1111.

For example, "being in pairs" may be understood as "corresponding to". If the first wedge portion 1210 includes one second convex curved portion 1211, the first curved portion 1111 includes one first concave curved portion 11111, the second convex curved portion 1211 of the first wedge portion 1210 and the first concave curved portion 11111 of the first curved portion 1111 are in a pair, and the second convex curved portion 1211 of the first wedge portion 1210 fits the first concave curved portion 11111 of the first curved portion 1111.

If the first wedge portion 1210 includes one second concave curved portion 1212, the first curved portion 1111 includes one first convex curved portion 11112, the second concave curved portion 1212 of the first wedge portion 1210 and the first convex curved portion 11112 of the first curved portion 1111 are in a pair, and the second concave curved portion 1212 of the first wedge portion 1210 fits the first convex curved portion 11112 of the first curved portion 1111.

It should be noted that a "curved portion" in this embodiment of this application may be alternatively replaced with a circular arc, a curve, a curved surface, a circular arc surface, an arc surface, or an arc. For example, a convex curved portion may also be referred to as a convex circular arc, a convex curved surface, or a convex arc surface. This is not limited herein.

One wedge 1200 includes one pair of first wedge portions 1210. The pair of wedge portions 1210 are located on two sides of a wedge body 1250 and are symmetrical along a symmetry axis of the wedge 1200. An area, facing an air gap, between the pair of first wedge portions 1210 is referred to as a second wedge portion 1220.

FIG. 6 is a schematic diagram of a partial structure of a rotor according to an embodiment of this application. A wedge 1200 is connected to two adjacent pole shoes 1100. The wedge 1200 includes first wedge portions 1210, and the first wedge portion 1210 includes at least one curved portion. The first wedge portion 1210 may include one or more second concave curved portions 1212, and/or one or more second convex curved portions 1211, and/or one or more line segments.

Optionally, the wedge 1200 may further include a fourth wedge portion 1240, and a radial bottom of the wedge body 1250 includes the fourth wedge portion 1240. The rotor core 1300 further includes a first rotor core portion 1310. The first rotor core portion 1310 radially faces toward the slot. A plurality of first rotor core portions 1310 are disposed at intervals along the circumferential direction of the rotor core body. The fourth wedge portion 1240 fits the first rotor core portion 1310, to implement connection between the wedge 1200 and the rotor core 1300. The fourth wedge portion 1240 includes one or more curved portions and/or one or more line segments. The first rotor core portion 1310 includes one or more curved portions and/or one or more line segments. The foregoing structures are used, to improve stability of the wedge 1200 in the slot. In addition, it is ensured that a length of the wedge body 1250 is long enough, so that the wedge 1200 is enough to fully isolate two rotor windings 1400 in the slot, and an insulation function is implemented.

For example, in addition to a V-shaped structure shown in FIG. 6, the fourth wedge portion 1240 may be of another structure, for example, a W-shaped structure or a U-shaped structure. This is not limited herein.

Optionally, the slot is filled with potting compound 1600. The potting compound 1600 is bonded to the wedge 1200. The potting compound 1600 is bonded to the pole shoe 1100. The potting compound 1600 is bonded to the rotor windings 1400. The pole shoe 1100, the wedge 1200, and the rotor windings 1400 are solidified as a whole by using the potting compound, and strength of the components in the slot is increased.

In this embodiment of this application, the wedges fit the pole shoes through the curved portions. The curved portions can effectively relieve stress concentration of joint portions, increase strength of the wedges and the pole shoes, and effectively increase effective winding space of the slots in the rotor. In this way, strength of the wedges and the pole shoes is increased, a maximum speed of the motor can also be increased, and power density of the motor is increased.

Next, the pole shoe 1100 and the wedge 1200 in the rotor 1000 are separately described in detail.

First, the pole shoe 1100 is described. FIG. 7 is a schematic diagram of a structure of a pole shoe according to an embodiment of this application. The pole shoe 1100 includes the first curved portion 1111, a second pole shoe portion 1112, and a third pole shoe portion 1113. The third pole shoe portion 1113 included in the hook-shaped pole shoe end portion 1110 includes one or more third concave curved portions and optionally one or more line segments. The third pole shoe portion 1113 is tangent to the first curved portion 1111. The third pole shoe portion 1113 is tangent to the second pole shoe portion 1112. The third pole shoe portion 1113 is used to extend a circumferential length of the pole shoe. In this way, the pole shoe can accommodate more rotor windings 1400, and torque density and power density of the motor in which the rotor 1000 is used are increased. As shown in FIG. 7, the third pole shoe portion 1113 includes one third concave curved portion.

For the hook-shaped pole shoe end portion 1110, there may be a plurality of implementation solutions. The following provides examples for description with reference to the accompanying drawings.

In a possible implementation solution, refer to FIG. 8. FIG. 8 is a schematic diagram of a structure of a hook-shaped pole shoe end portion according to an embodiment of this application. The hook-shaped pole shoe end portion 1110 includes the first concave curved portion 11111, a smooth transition arc 1b, a convex curved portion 1c, and a concave curved portion 1d. The first concave curved portion 11111 fits the first wedge portion 1210, and the concave curved portion 1d is used to extend the circumferential length of the pole shoe 1100. The first curved portion 1111 includes the first concave curved portion 11111. The third pole shoe portion 1113 includes the concave curved portion 1d.

Portions between the first concave curved portion 11111 and the concave curved portion 1d include the smooth transition arc 1b and the convex curved portion 1c. Structures of the smooth transition arc 1b and the convex curved portion 1c can reduce thickness of the pole shoe 1100, reduce magnetic leakage, and weaken adverse impact caused by circumferential extension of the pole shoe 1100.

In another possible implementation solution, refer to FIG. 9. FIG. 9 is a schematic diagram of another structure of a hook-shaped pole shoe end portion according to an embodiment of this application. The hook-shaped pole shoe end portion 1110 includes the first convex curved portion 11112, the first concave curved portion 11111, a smooth transition arc 2c, a line segment 2d, a smooth transition arc 2e, a line segment 2f, a smooth transition arc 2g, a line segment 2h, and a concave curved portion 2i. The first convex curved portion 11112 and the first concave curved portion 11111 fit the first wedge portion 1210. In this case, the first wedge portion 1210 includes the second concave curved portion 1212 that is in pairs with (or that corresponds to) the first convex curved portion 11112, and the second convex curved portion 1211 that is in pairs with (or that corresponds to) the first concave curved portion 11111. The first curved portion 1111 includes the first concave curved portion 11111 and the first convex curved portion 11112. The third pole shoe portion 1113 includes the concave curved portion 2i and the line segment 2h. The line segment 2h and the concave curved portion 2i are used to extend the circumferential length of the pole shoe 1100.

Portions between the first concave curved portion 11111 and the line segment 2h include the smooth transition arc 2c, the line segment 2d, the smooth transition arc 2e, the line segment 2f, and the smooth transition arc 2g. Structures of the smooth transition arc 2c, the line segment 2d, the smooth transition arc 2e, the line segment 2f, and the smooth transition arc 2g can reduce thickness of the pole shoe 1100, reduce magnetic leakage, and weaken adverse impact caused by circumferential extension of the pole shoe 1100.

In another possible implementation solution, the first curved portion 1111 of the hook-shaped pole shoe end portion 1110 includes the first convex curved portion 11112. In this case, the first wedge portion 1210 includes the second concave curved portion 1212 that is in pairs with (or corresponds to) the first convex curved portion 11112.

It should be noted that the foregoing smooth transition arcs may include one or more arcs (or arc surfaces), or may include a combination of one or more arcs (arc surfaces) and line segments. This is not limited herein.

For the second pole shoe portion 1112, there are also a plurality of possible implementations. The following describes the plurality of possible implementations with reference to the accompanying drawings. FIG. 10 is a schematic diagram of still another structure of a pole shoe according to an embodiment of this application. The second pole shoe portion 1112 is in an eccentric circular arc shape, and a center position of the eccentric circular arc shape does not coincide with an axis center of the rotating shaft.

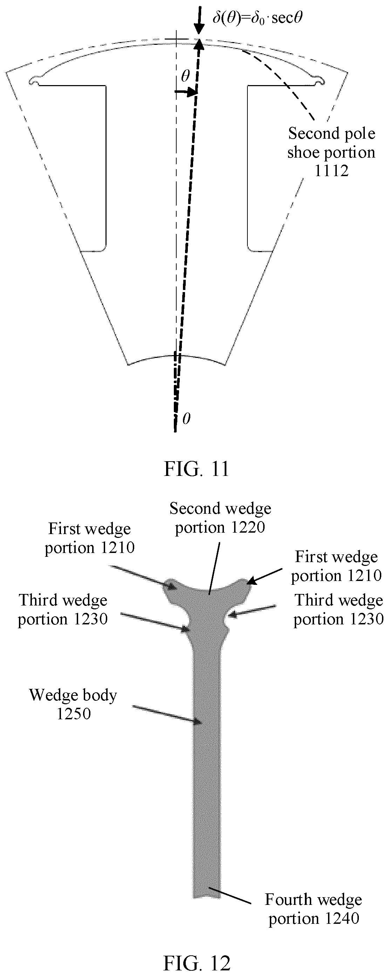

In another possible implementation, the second pole shoe portion is in an arc shape of an air gap secant function. Specifically, FIG. 11 is a schematic diagram of yet another structure of a pole shoe according to an embodiment of this application. An air gap length of the second pole shoe portion 1112 satisfies: $\delta(\theta) = \delta_0 \cdot \sec\theta$, where $\delta(\theta)$ represents the air gap length of the second pole shoe portion 1112, $\delta_0$ represents an air gap length at a position of a symmetry line of a pole arc curve in the pole shoe 1100, and $\theta$ represents a circumferential angle between a radial line on which the second pole shoe portion 1112 is located and the symmetry line of the pole shoe 1100. The air gap length is a length of a gap between the stator 12 and the rotor 1000 in the motor. The pole arc curve encloses a main area in which the pole shoe 1100 faces the air gap.

The foregoing pole shoe structure is used, so that torque fluctuation of the motor in which the pole shoe is used can be effectively reduced, and performance of noise, vibration, and harshness (NVH) of the motor can be improved.

Next, the wedge 1200 is described. There are also a plurality of implementation solutions for the wedge 1200, for example, the structure shown in FIG. 6, or a variation of the structure shown in FIG. 6. For ease of understanding, refer to FIG. 12. FIG. 12 is a schematic diagram of another structure of a wedge according to an embodiment of this application. The wedge 1200 includes the first wedge portions 1210, the second wedge portion 1220, the fourth wedge portion 1240, and the wedge body 1250.

One wedge 1200 includes one pair of first wedge portions 1210. The pair of wedge portions 1210 are located on the two sides of the wedge body 1250 and are symmetrical along the symmetry axis of the wedge 1200. The area, facing the air gap, between the pair of first wedge portions 1210 is referred to as the second wedge portion 1220. FIG. 12 is used as an example. The first wedge portion 1210 includes one second convex curved portion 1211.

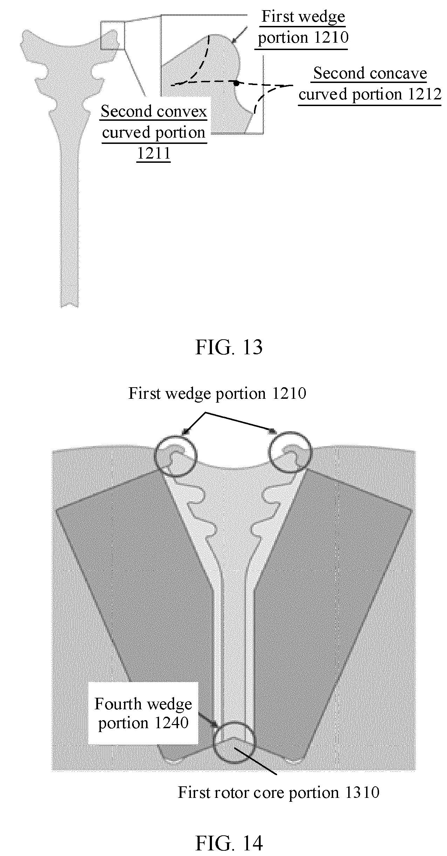

It may be understood that the first wedge portion 1210 may further have another structure, to fit the first curved portion 1111. For ease of understanding, refer to FIG. 13. FIG. 13 is a schematic diagram of a structure of a first wedge portion according to an embodiment of this application. The first wedge portion 1210 includes one second convex curved portion 1211 and one second concave curved portion 1212, and the first wedge portion 1210 fits the first curved portion 1111 through the second convex curved portion 1211 and the second concave curved portion 1212. Specifically, FIG. 14 is a schematic diagram of fitting between the wedge 1200 and the pole shoe 1100. Refer to FIG. 14. FIG. 14 is a schematic diagram of another partial structure of a rotor according to an embodiment of this application. Stability of the wedge 1200 and the pole shoe 1100 is improved through the plurality of curved portions.

The wedge further includes the second wedge portion 1220, the second wedge portion 1220 includes at least one concave curved portion, and two sides of the second wedge portion 1220 are connected to one pair of first wedge portions 1210. The second wedge portion 1220 is in an arc surface shape, so that stress concentration in an area of an arc surface can be relieved, and strength of the wedge 1200 can be increased.

Optionally, the second wedge portion 1220 may further include one or more line segments. Alternatively, the second wedge portion 1220 may further include one or more convex curved portions, and/or one or more concave curved portions, and/or one or more line segments. For example, the second wedge portion 1220 includes one concave curved portion and two line segments tangent to the concave curved portion, and the concave curved portion is connected to the first wedge portions 1210 through the two line segments on the two sides.

Optionally, the wedge 1200 may further include one or more pairs of third wedge portions 1230. The wedge 1200 shown in FIG. 12 includes one pair of third wedge portions 1230. The wedge 1200 shown in FIG. 6 does not include the third wedge portion 1230. Each pair of third wedge portions 1230 are located on the two sides of the wedge body 1250, and are symmetrical along the symmetry axis of the wedge 1200. The third wedge portion 1230 includes one or more circular arc curved portions and/or one or more line segments. The circular arc curved portion may be a convex curved portion, or may be a concave curved portion, or may be a combination of a convex curved portion and a concave curved portion. This is not limited herein.

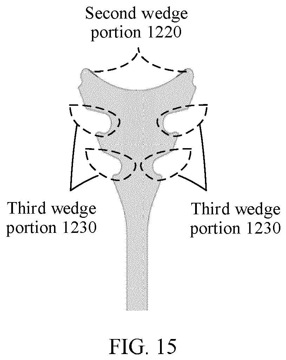

For example, the wedge 1200 includes the plurality of pairs of third wedge portions 1230. Refer to FIG. 15. FIG. 15 is a schematic diagram of a structure of a third wedge portion according to an embodiment of this application. The wedge 1200 includes two pairs of third wedge portions 1230.

Optionally, the pairs of third wedge portions 1230 are different in size and/or shape. For example, concave curved portions (or grooves) of one pair of third wedge portions are wide and shallow, and concave curved portions (or grooves) of the other pair of third wedge portions are narrow and deep. For another example, concave curved portions (or grooves) of one pair of third wedge portions are wide and deep, and concave curved portions (or grooves) of the other pair of third wedge portions are shallow and narrow. This is not limited herein.

Optionally, when the wedge 1200 includes the plurality of pairs of third wedge portions 1230, the plurality of third wedge portions 1230 may be the same in size, and/or the plurality of third wedge portions 1230 may be the same in shape.

Bonding strength between the wedge and the potting compound is increased through the third wedge portion, and stability of the rotor is improved.

For descriptions of a direction or a position, refer to "a radial direction", "an axial direction", and "a circular direction". In the meaning of this application, a rotation axis of the rotor 1000 is used.

It should be understood that "one embodiment" or "an embodiment" mentioned in the entire specification means that particular features, structures, or characteristics related to embodiments are included in at least one embodiment of this application. Therefore, "in one embodiment" or "in an embodiment" appearing throughout the specification does not refer to a same embodiment. In addition, these particular features, structures, or characteristics may be combined in one or more embodiments in any appropriate manner. It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

In addition, the term "system" in this specification may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in embodiments of this application, "B corresponding to A" indicates that B is associated with A, and B may be determined according to A. However, it should be further understood that determining B based on A does not mean that B is determined based only on A. B may alternatively be determined based on A and/or other information.

**Claims**

1. A rotor (1000), comprising:

   a rotor core (1300), a plurality of slots, and a rotating shaft (1500), wherein each slot comprises one wedge (1200), and rotor windings (1400) are wound in each slot;
   the rotor core (1300) is sleeved on the rotating shaft (1500), and the plurality of slots are disposed at intervals along a circumferential direction of the rotor core (1300);
   the rotor core (1300) comprises a rotor core body and a plurality of pole shoes (1100), and the plurality of pole shoes (1100) are disposed at intervals along a circumferential direction of the rotor core body;
   the pole shoe (1100) comprises a pole shoe body (1120) and two symmetrical hook-shaped pole shoe end portions (1110), wherein each hook-shaped pole shoe end portion (1110) becomes thinner along a circumferential direction relative to the pole shoe body (1120) and comprises at least one first curved portion (1111); and
   the wedge (1200) comprises a wedge body (1250) and two symmetrical first wedge portions (1210), each first wedge portion (1210) comprises at least one second curved portion, and each first wedge portion (1210) fits one first curved portion (1111) of a hook-shaped pole shoe end portion (1110) of one of the pole shoes (1100), **characterised in that**
   the pole shoe (1100) further comprises a second pole shoe portion (1112), and the second pole shoe portion (1112) is connected to the first curved portions (1111); and
   the second pole shoe portion (1112) is in an eccentric circular arc shape, and a center position of the eccentric circular arc shape does not coincide with an axis center of the rotating shaft (1500); or
   the second pole shoe portion (1112) is in an arc shape of an air gap secant function: and
   wherein the pole shoe (1100) further comprises third pole shoe portions (1113), and each third pole shoe portion (1113) comprises one or more third concave curved portions;
   each third pole shoe portion (1113) is tangent to a first curved portion (1111);

each third pole shoe portion (1113) is tangent to a second pole shoe portion (1112); and
each third pole shoe portion (1113) is used to extend a circumferential length of the pole shoe (1100).

2. The rotor (1000) according to claim 1, wherein

each first curved portion (1111) comprises a first concave curved portion and/or a first convex curved portion;
each second curved portion comprises a second convex curved portion and/or a second concave curved portion; and
the first concave curved portion fits the second convex curved portion, and/or the first convex curved portion fits the second concave curved portion.

3. The rotor (1000) according to claim 1 or 2, wherein an air gap length of the second pole shoe portion (1112) satisfies:

$$\delta(\theta) = \delta_0 \cdot \sec\theta,$$

wherein
$\delta(\theta)$ represents the air gap length of the second pole shoe portion (1112), $\delta_0$ represents an air gap length at a position of a symmetry line of a pole arc curve in the pole shoe (1100), and $\theta$ represents a circumferential angle between a radial line on which the second pole shoe portion (1112) is located and the symmetry line of the pole shoe (1100).

4. The rotor (1000) according to any one of claims 1 to 3, wherein
the wedge (1200) further comprises a second wedge portion (1220), the second wedge portion (1220) is formed between the two first wedge portions (1210), and the second wedge portion (1220) comprises at least one concave curved portion.

5. The rotor (1000) according to any one of claims 1 to 4, wherein

the wedge (1200) further comprises one or more pairs of third wedge (1200) portions; and
each pair of third wedge (1200) portions are symmetrically located on two sides of the wedge body (1250).

6. The rotor (1000) according to claim 5, wherein when the wedge (1200) comprises the plurality of pairs of third wedge (1200) portions, the plurality of pairs of third wedge (1200) portions are different in size and/or shape.

7. The rotor (1000) according to any one of claims 1 to 6, wherein a radial bottom of the wedge body (1250) is connected to the rotor core (1300).

8. The rotor (1000) according to any one of claims 1 to 7, wherein the slot is filled with potting compound (1600);

the potting compound (1600) is bonded to the wedge (1200);
the potting compound (1600) is bonded to the pole shoe (1100); and
the potting compound (1600) is bonded to the rotor windings (1400).

9. A motor (10), comprising at least a stator (12) and the rotor (1000) according to any one of claims 1 to 8, wherein the stator (12) is sleeved on an outer circumference of the rotor (1000), and the stator (12) comprises a stator core and stator (12) windings wound around the stator core.

10. A powertrain, comprising the motor (10) according to claim 9, a reducer, and a controller (20), wherein the reducer (50) is configured to adjust a rotation speed of the motor (10), and the controller (20) is configured to control working of the motor (10).

11. A vehicle (100), comprising at least the motor (10) according to claim 9.

**Patentansprüche**

1. Rotor (1000), der umfasst:

einen Rotorkern (1300), eine Vielzahl von Schlitzen und eine rotierende Welle (1500), wobei jeder Schlitz einen Keil (1200) umfasst und Rotorwicklungen (1400) in jedem Schlitz gewickelt sind;
der Rotorkern (1300) hülsenartig auf die rotierende Welle (1500) aufgesetzt ist und die Vielzahl von Schlitzen in Abständen entlang einer Umfangsrichtung des Rotorkerns (1300) angeordnet sind;
der Rotorkern (1300) einen Rotorkernkörper und eine Vielzahl von Polschuhen (1100) umfasst und die Vielzahl von Polschuhen (1100) in Abständen entlang einer Umfangsrichtung des Rotorkernkörpers angeordnet sind;
der Polschuh (1100) einen Polschuhkörper (1120) und zwei symmetrische hakenförmige Polschuh-Endabschnitte (1110) umfasst, wobei jeder hakenförmige Polschuh-Endabschnitt (1110) entlang einer Umfangsrichtung relativ zu dem Polschuhkörper (1120) dünner wird und mindestens einen ersten gekrümmten Abschnitt (1111) umfasst;

und

der Keil (1200) einen Keilkörper (1250) und zwei symmetrische erste Keilabschnitte (1210) umfasst, wobei jeder erste Keilabschnitt (1210) mindestens einen zweiten gekrümmten Abschnitt umfasst und jeder erste Keilabschnitt (1210) zu einem ersten gekrümmten Abschnitt (1111) eines hakenförmigen Polschuh-Endabschnitts (1110) eines der Polschuhe (1100) passt, **dadurch gekennzeichnet, dass**

der Polschuh (1100) ferner einen zweiten Polschuhabschnitt (1112) umfasst und der zweite Polschuhabschnitt (1112) mit den ersten gekrümmten Abschnitten (1111) verbunden ist;

und

der zweite Polschuhabschnitt (1112) in einer exzentrischen Kreisbogenform vorliegt und eine Mittelpunktposition der exzentrischen Kreisbogenform nicht mit einem Achsenmittelpunkt der rotierenden Welle (1500) zusammenfällt; oder der zweite Polschuhabschnitt (1112) in einer Form eines Bogens einer Luftspaltsekantenfunktion vorliegt; und

wobei der Polschuh (1100) ferner dritte Polschuhabschnitte (1113) umfasst und jeder dritte Polschuhabschnitt (1113) einen oder mehrere dritte konkav gekrümmte Abschnitte umfasst;

jeder dritte Polschuhabschnitt (1113) einen ersten gekrümmten Abschnitt (1111) tangiert;

jeder dritte Polschuhabschnitt (1113) einen zweiten Polschuhabschnitt (1112) tangiert; und jeder dritte Polschuhabschnitt (1113) verwendet wird, um eine Umfangslänge des Polschuhs (1100) zu verlängern.

2. Rotor (1000) nach Anspruch 1, wobei jeder erste gekrümmte Abschnitt (1111) einen ersten konkav gekrümmten Abschnitt und/oder einen ersten konvex gekrümmten Abschnitt umfasst;

jeder zweite gekrümmte Abschnitt einen zweiten konvex gekrümmten Abschnitt und/oder einen zweiten konkav gekrümmten Abschnitt umfasst; und der erste konkav gekrümmte Abschnitt zu dem zweiten konvex gekrümmten Abschnitt passt und/oder der erste konvex gekrümmte Abschnitt zu dem zweiten konkav gekrümmten Abschnitt passt.

3. Rotor (1000) nach Anspruch 1 oder 2, wobei eine Luftspaltlänge des zweiten Polschuhabschnitts (1112) erfüllt:

$$\delta(\theta) = \delta 0 \cdot sec\theta,$$

wobei

$\delta(\theta)$ die Luftspaltlänge des zweiten Polschuhabschnitts (1112) darstellt, $\delta_0$ eine Luftspaltlänge an einer Position einer Symmetrielinie einer Polbogenkurve in dem Polschuh (1100) darstellt und $\theta$ einen Umfangswinkel zwischen einer radialen Linie, auf der sich der zweite Polschuhabschnitt (1112) befindet, und der Symmetrielinie des Polschuhs (1100) darstellt.

4. Rotor (1000) nach einem der Ansprüche 1 bis 3, wobei

der Keil (1200) ferner einen zweiten Keilabschnitt (1220) umfasst, der zweite Keilabschnitt (1220) zwischen den beiden ersten Keilabschnitten (1210) ausgebildet ist und der zweite Keilabschnitt (1220) mindestens einen konkav gekrümmten Abschnitt umfasst.

5. Rotor (1000) nach einem der Ansprüche 1 bis 4, wobei

der Keil (1200) ferner ein oder mehrere Paare dritter Keilabschnitte (1200) umfasst; und jedes Paar dritter Keilabschnitte (1200) symmetrisch auf zwei Seiten des Keilkörpers (1250) angeordnet ist.

6. Rotor (1000) nach Anspruch 5, wobei, wenn der Keil (1200) die Vielzahl von Paaren dritter Keilabschnitte (1200) umfasst, die Vielzahl von Paaren dritter Keilabschnitte (1200) sich in Größe und/oder Form unterscheiden.

7. Rotor (1000) nach einem der Ansprüche 1 bis 6, wobei eine radiale Unterseite des Keilkörpers (1250) mit dem Rotorkern (1300) verbunden ist.

8. Rotor (1000) nach einem der Ansprüche 1 bis 7, wobei der Schlitz mit Vergussmasse (1600) gefüllt ist;

die Vergussmasse (1600) mit dem Keil (1200) verklebt ist;

die Vergussmasse (1600) mit dem Polschuh (1100) verklebt ist; und

die Vergussmasse (1600) mit den Rotorwicklungen (1400) verklebt ist.

9. Motor (10), der mindestens einen Stator (12) und den Rotor (1000) nach einem der Ansprüche 1 bis 8 umfasst, wobei der Stator (12) hülsenartig auf einen Außenumfang des Rotors (1000) aufgesetzt ist und der Stator (12) einen Statorkern und um den Statorkern gewickelte Wicklungen des Stators (12) umfasst.

10. Antriebsstrang, der den Motor (10) nach Anspruch 9, ein Untersetzungsgetriebe und eine Steuerung (20) umfasst, wobei das Untersetzungsgetriebe (50) konfiguriert ist, um eine Drehzahl des Motors (10) anzupassen, und die Steuerung (20) konfiguriert ist, um den Betrieb des Motors (10) zu steuern.

**11.** Fahrzeug (100), das mindestens den Motor (10) nach Anspruch 9 umfasst.

## Revendications

**1.** Rotor (1000), comprenant :

un noyau de rotor (1300), une pluralité de fentes, et un arbre rotatif (1500), dans lequel chaque fente comprend une cale (1200), et des enroulements de rotor (1400) sont enroulés dans chaque fente ;
le noyau de rotor (1300) est manchonné sur l'arbre rotatif (1500), et la pluralité de fentes sont disposées à intervalles le long d'une direction circonférentielle du noyau de rotor (1300) ;
le noyau de rotor (1300) comprend un corps de noyau de rotor et une pluralité d'épanouissements polaires (1100), et la pluralité d'épanouissements polaires (1100) sont disposés à intervalles le long d'une direction circonférentielle du corps de noyau de rotor ;
l'épanouissement polaire (1100) comprend un corps d'épanouissement polaire (1120) et deux parties d'extrémité d'épanouissement polaire en forme de crochet (1110) symétriques, dans lequel chaque partie d'extrémité d'épanouissement polaire en forme de crochet (1110) s'amincit le long d'une direction circonférentielle par rapport au corps d'épanouissement polaire (1120) et comprend au moins une première partie incurvée (1111) ; et
la cale (1200) comprend un corps de cale (1250) et deux premières parties de cale (1210) symétriques, chaque première partie de cale (1210) comprend au moins une seconde partie incurvée, et chaque première partie de cale (1210) s'adapte à une première partie incurvée (1111) d'une partie d'extrémité d'épanouissement polaire en forme de crochet (1110) de l'un des épanouissements polaires (1100),
**caractérisé en ce que**
l'épanouissement polaire (1100) comprend en outre une deuxième partie d'épanouissement polaire (1112), et la deuxième partie d'épanouissement polaire (1112) est reliée aux premières parties incurvées (1111) ; et
la deuxième partie d'épanouissement polaire (1112) est en forme d'arc circulaire excentrique, et une position centrale de la forme d'arc circulaire excentrique ne coïncide pas avec un centre d'axe de l'arbre rotatif (1500) ; ou
la deuxième partie d'épanouissement polaire (1112) est en forme d'arc d'une fonction sécante d'entrefer ; et
dans lequel l'épanouissement polaire (1100) comprend en outre des troisièmes parties d'épanouissement polaire (1113), et chaque troisième partie d'épanouissement polaire (1113) comprend une ou plusieurs troisièmes parties incurvées concaves ;
chaque troisième partie d'épanouissement polaire (1113) est tangente à une première partie incurvée (1111) ;
chaque troisième partie d'épanouissement polaire (1113) est tangente à une deuxième partie d'épanouissement polaire (1112) ; et
chaque troisième partie d'épanouissement polaire (1113) est utilisée pour rallonger une longueur circonférentielle de l'épanouissement polaire (1100).

**2.** Rotor (1000) selon la revendication 1, dans lequel chaque première partie

incurvée (1111) comprend une première partie incurvée concave et/ou une première partie incurvée convexe ;
chaque seconde partie incurvée comprend une seconde partie incurvée convexe et/ou une seconde partie incurvée concave ; et
la première partie incurvée concave s'adapte à la seconde partie incurvée convexe, et/ou la première partie incurvée convexe s'adapte à la seconde partie incurvée concave.

**3.** Rotor (1000) selon la revendication 1 ou 2, dans lequel une longueur d'entrefer de la deuxième partie d'épanouissement polaire (1112) satisfait à :

$$\delta(\theta) = \delta_0 \cdot \sec\theta,$$

dans lequel
$\delta(\theta)$ représente la longueur d'entrefer de la deuxième partie d'épanouissement polaire (1112), $\delta_0$ représente une longueur d'entrefer à une position d'une ligne de symétrie d'une courbe d'arc polaire dans l'épanouissement polaire (1100), et $\theta$ représente un angle circonférentiel entre une ligne radiale sur laquelle est située la deuxième partie d'épanouissement polaire (1112) et la ligne de symétrie de l'épanouissement polaire (1100).

**4.** Rotor (1000) selon l'une quelconque des revendications 1 à 3, dans lequel la cale (1200) comprend en outre une deuxième partie de cale (1220), la deuxième partie de cale (1220) est formée entre les deux premières parties de cale (1210), et la deuxième partie de cale (1220) comprend au moins une partie incurvée concave.

5. Rotor (1000) selon l'une quelconque des revendications 1 à 4, dans lequel la cale (1200) comprend en outre une ou plusieurs paires de troisièmes parties de cale (1200) ; et
   chaque paire de troisièmes parties de cale (1200) est située symétriquement sur deux côtés du corps de cale (1250).

6. Rotor (1000) selon la revendication 5, dans lequel, lorsque la cale (1200) comprend la pluralité de paires de troisièmes parties de cale (1200), la pluralité de paires de troisièmes parties de cale (1200) sont différentes en taille et/ou en forme.

7. Rotor (1000) selon l'une quelconque des revendications 1 à 6, dans lequel un fond radial du corps de cale (1250) est relié au noyau de rotor (1300).

8. Rotor (1000) selon l'une quelconque des revendications 1 à 7, dans lequel la fente est remplie de composé d'enrobage (1600) ;

   le composé d'enrobage (1600) est collé à la cale (1200) ;
   le composé d'enrobage (1600) est collé à l'épanouissement polaire (1100) ; et
   le composé d'enrobage (1600) est collé aux enroulements de rotor (1400).

9. Moteur (10), comprenant au moins un stator (12) et le rotor (1000) selon l'une quelconque des revendications 1 à 8, dans lequel le stator (12) est manchonné sur une circonférence extérieure du rotor (1000), et le stator (12) comprend un noyau de stator et des enroulements de stator (12) enroulés autour du noyau de stator.

10. Groupe motopropulseur, comprenant le moteur (10) selon la revendication 9, un réducteur et un dispositif de commande (20), dans lequel le réducteur (50) est conçu pour ajuster une vitesse de rotation du moteur (10) et le dispositif de commande (20) est configuré pour commander le fonctionnement du moteur (10).

11. Véhicule (100), comprenant au moins le moteur (10) selon la revendication 9.

FIG. 1

FIG. 2

Pole shoe 1100

Wedge 1200

Rotor winding 1400

Rotating shaft 1500

Rotor core 1300

Rotor 1000

FIG. 3

Hook-shaped pole shoe end portion 1110

Second pole shoe portion 1112

Hook-shaped pole shoe end portion 1110

Hook-shaped pole shoe end portion 1110

Pole shoe body 1120

Pole shoe 1100

First curved portion 1111

FIG. 4

Second convex
curved portion
1211

First wedge
portion 1210

Second convex
curved portion
1211

Second wedge
portion 1220

FIG. 5

Pole shoe 1100

Potting
compound 1600

Potting
compound 1600

Wedge body
1250

Rotor winding
1400

Wedge 1200

First rotor core
portion 1310

Fourth wedge
portion 1240

Rotor winding
1400

FIG. 6

Second pole shoe
portion 1112

Third pole shoe
portion 1113

Hook-shaped
pole shoe end
portion 1110

First curved portion 1111

FIG. 7

Concave curved
portion 1d

Convex curved
portion 1c

Hook-shaped pole shoe
end portion 1110

Smooth
transition arc 1b

First concave curved
portion 11111

FIG. 8

Concave curved
portion 2i    Line
segment 2h          Smooth
transition arc 2g

Line segment 2f

Hook-shaped pole shoe
end portion 1110

First convex curved
portion 11112

Smooth
transition arc 2e

Line segment 2d

Smooth transition arc 2c

First concave curved
portion 11111

FIG. 9

Second pole shoe portion 1112

R

FIG. 10

$$\delta(\theta) = \delta_0 \cdot \sec\theta$$

$\theta$

Second pole
shoe portion
1112

*0*

FIG. 11

First wedge
portion 1210

Second wedge
portion 1220

First wedge
portion 1210

Third wedge
portion 1230

Third wedge
portion 1230

Wedge body
1250

Fourth wedge
portion 1240

FIG. 12

First wedge portion 1210

Second concave curved portion 1212

Second convex curved portion 1211

FIG. 13

First wedge portion 1210

Fourth wedge portion 1240

First rotor core portion 1310

FIG. 14

Second wedge
portion 1220

Third wedge
portion 1230

Third wedge
portion 1230

FIG. 15

**EP 4 195 458 B1**

## REFERENCES CITED IN THE DESCRIPTION

**Patent documents cited in the description**

- US 2015076935 A1
- DE 102019133580 A1